# EUROPÄISCHE PATENTANMELDUNG

(11) **EP 2 966 035 A1**
(43) Veröffentlichungstag der Anmeldung: **13.01.2016**
(21) Anmeldenummer: 14002335.9
(22) Anmeldetag: 08.07.2014
(51) Int. Cl.: C01B 7/03, C01G 49/06, C23G 1/36

(54) **Verfahren zur Rückgewinnung von Salzsäure aus Metallchloridlösungen mit hohem Eisenchloridanteil**

(71) Anmelder: KRONOS INTERNATIONAL, INC., 51373 Leverkusen (DE)
(72) Erfinder: Gnotke, Oliver, 51069 Köln (DE)

(57) **Zusammenfassung**

Die Erfindung betrifft ein Verfahren zur Rückgewinnung von Salzsäure aus konzentrierten Metallchloridlösungen, die einen hohen Eisenchloridanteil aufweisen, wobei das Eisen zumindest teilweise in dreiwertiger Form vorliegt. Diese Metallchloridlösungen fallen insbesondere bei der Säurelaugung von Erzen an.

Das erfindungsgemäße Verfahren umfasst die Schritte:
a) Sprühgranulation der Metallchloridlösung bei Temperaturen von 150 bis 300°C, bevorzugt 150 bis 250°C, wobei zumindest ein Teil des Eisenchlorids in Eisenoxid umgewandelt wird und ein Granulat sowie HCl-haltiges Gas entsteht, und HCl-haltiges Gas entsteht,
b) Pyrohydrolyse des in Verfahrensschritt a) entstandenen Granulats in einem Reaktor bei Temperaturen von über 550°C, bevorzugt über 800°C, wobei HCl-haltiges Gas entsteht,
c) Rückgewinnung überazeotroper Salzsäure (Konzentration >20 Gew.-%) aus den in den Verfahrensschritten a) und b) entstandenen HCl-haltigen Gasströmen.

Das erfindungsgemäße Verfahren zeichnet sich dadurch aus, dass Lösungen mit hohem FeCl₃-Gehalt verarbeitet werden können und dass ein Großteil der Wasserverdampfung bei niedrigen Temperaturen stattfindet und somit hohe Durchsätze in einer Anlage erreicht werden.

## Beschreibung

### Gebiet der Erfindung

Die Erfindung richtet sich auf ein Verfahren zur Rückgewinnung von Salzsäure aus konzentrierten Metallchloridlösungen, die einen hohen Eisenchloridanteil aufweisen und die insbesondere bei der Säurelaugung von Erzen oder beim Beizen von Walzstahlprodukten anfallen.

### Technologische Hintergrund der Erfindung

Säurerückgewinnung ist in allen Verfahren, die Säurelaugung (Leaching) bzw. Beizen mit Säuren zum Inhalt haben, aus ökonomischen Gründen ein wesentliches Verfahrensmerkmal. Insbesondere für die Regeneration von Salzsäure, die beispielsweise zum Beizen von Stahl vor der Galvanisierung eingesetzt wird, aus den Beizlösungen sind zahlreiche Verfahrensweisen bekannt. Das am weitesten verbreitete Verfahren ist die Pyrohydrolyse, die in einem Sprühröster oder in einem Wirbelschichtröster bei Temperaturen um 800°C durchgeführt wird. Hierbei werden die Metallchloride möglichst schnell und vollständig in die Oxide (wie z.B. Fe₂O₃) und HCl umgewandelt (Baerhold, F.H. & Lebl, A. "Recycling of acids via pyrohydrolysis: fundamentals and applications", REWAS'99 Global symposium on recycling, waste treatment and clean technology, Vol. II, (1999) S. 1297 - 1307).

Die für die Aufarbeitung von Stahlbeizen notwendigen Anlagen sind üblicherweise deutlich kleiner als die für die Aufbereitung von Erz-Leachlösungen. Beispielsweise verarbeitet die größte Anlage für Beizlösungen 18 m³/h Eisenchloridlösung.

Die Baugröße der Pyrohydrolyse-Apparaturen ist aufgrund der hohen Temperaturen und des somit sehr großen Gasvolumenstroms begrenzt, so dass man beim Erz-Leaching mit einer Vielzahl von parallel geschalteten Säureregenerationsanlagen arbeiten müsste.

Die EP 0 625 957 B1 offenbart ein Verfahren zur Rückgewinnung von Salzsäure aus Eisenchlorid-enthaltenden Leachlösungen, welches vor der Pyrohydrolyse eine Vorkonzentration und anschließend eine Pelletisierung der Chloridlösung vorsieht. Die Vorkonzentration erfolgt in einem Venturidüsen- oder Sprühsystem und durch anschließenden Kontakt mit den überhitzten HCl-haltigen Abgasen des Wirbelschichtrösters. Anschließend wird das Metallchlorid-Konzentrat pelletiert und bei Temperaturen von 130 bis 150°C getrocknet. Die getrockneten Pellets werden nachfolgend im Wirbelschichtröster thermisch gespalten (Pyrohydrolyse). Das HCl-haltige Abgas wird über eine HCl-Absorptionskolonne geführt, und eine azeotrope Salzsäure (18 bis 20 Gew.-%) wird zurückgewonnen.

Dieses Verfahren hat den Vorteil, dass ein Großteil der Wasserverdampfung bei niedrigen Temperaturen (Trocknungstemperatur 130-150°C) stattfindet und somit in einer Anlage ein Vielfaches (bis zu 4mal) des Durchsatzes gegenüber einer einstufigen Wirbelschicht erreicht werden kann.

Da bei der Säurelaugung von eisenhaltigen Erzen (Ilmenit) signifikant größere Mengen an Metallchloridlösungen anfallen als beim Stahlbeizen, ist es wünschenswert, mit möglichst hoher Säurekonzentration zu arbeiten, da hierdurch die in der Pyrohydrolyse zu verdampfenden Wassermengen klein gehalten werden können und damit der spezifische Energiebedarf niedriger ist. Bei der Verarbeitung von FeCl₂-Lösungen ist die erreichbare HCl-Konzentration jedoch durch die FeCl₂-Löslichkeit begrenzt. Werden die FeCl₂-Konzentrationen über die Löslichkeitsgrenze hinweg erhöht, kommt es bei der Vorkonzentration im Bereich der Venturidüse zur Auskristallisation und damit zu Verstopfungen (Ahmad K. & Lee, C. "Minimizing fuel cost during thermal regeneration of the hydrochloric acid lixiviant", Hydrometallurgy 2003, Proceedings of the International Symposium honoring Professor lan M. Ritchie, 5th, Vancouver, BC, Canada, Aug. 24-27, 2003 (2003), 1, 533-544).

FeCl₃ weist zwar eine höhere Löslichkeit als FeCl₂ auf, jedoch verdampft es bei den während der Pyrohydrolyse in dem Wirbelschichtröster herrschenden Temperaturen und hydrolysiert dann in der Gasphase. Es bilden sich staubfeine Eisenoxidpartikel, die wiederum mit den üblichen Aggregaten nicht aus dem HCl-Gasstrom abtrennbar sind (siehe: Baerhold & Lebl (1999) Seite 1298 unten).

Allerdings liegen gerade in den bei der Säurelaugung von eisenhaltigen Erzen anfallenden Metallchloridlösungen oft erhebliche Mengen des gelösten Eisens in dreiwertiger Form vor, und es kommt bei der Aufarbeitung zu den genannten Problemen. Man behilft sich deswegen teilweise mit einer Reduktion des dreiwertigen Eisens durch Zugabe von Eisenschrott. Dieses Verfahren ist allerdings mit hohen Kosten verbunden.

Peek ("Chloride pyrohydrolysis - Lixiviant regeneration and metal separation", Dissertation Technische Universität Delft/NL, 1996, S. 74) beschreibt ein Verfahren zur Pyrohydrolyse von FeCl₃-Lösung in einem im Gleichstrom betriebenen Sprühröster. Allerdings hat das Material einen hohen Restchloridgehalt, was eine zusätzliche thermische Behandlung erfordert. Desweiteren ist das Material aus Sprühröstern sehr feinteilig, so dass es nicht direkt für die Eisenherstellung nutzbar ist.

### Aufgabenstellung und Kurzbeschreibung der Erfindung

Der Erfindung liegt die Aufgabe zugrunde, ein Verfahren zur Aufbereitung von Metallchloridlösungen mit hohem Eisenchloridanteil und zur Rückgewinnung der Salzsäure anzugeben, dass die Nachteile der bekannten Verfahren überwindet.

Die Aufgabe wird gelöst durch ein Verfahren zur Rückgewinnung von Salzsäure aus konzentrierten Metallchloridlösungen mit hohem Eisenchloridanteil, wobei das Eisen zumindest teilweise in dreiwertiger Form vorliegt, umfassend die Verfahrensschritte:
a) Sprühgranulation der Metallchloridlösung bei Temperaturen von 150 bis 300°C, bevorzugt 150 bis 250°C, wobei zumindest ein Teil des Eisenchlorids in Eisenoxid umgewandelt wird und ein Granulat sowie HCl-haltiges Gas entsteht,
b) Pyrohydrolyse des in Verfahrensschritt a) entstandenen Granulats in einem Reaktor bei Temperaturen von über 550°C, bevorzugt über 800°C, wobei HCl-haltiges Gas entsteht,
c) Rückgewinnung einer überazeotropen HCl (Konzentration >20 Gew.-%) aus den in den Verfahrensschritten a) und b) entstandenen HCl-haltigen Gasen.

Weitere vorteilhafte Ausformungen der Erfindung sind in den Unteransprüchen angegeben.

### Figuren

Figur 1: Schematisches Verfahrensfließbild: Variante A
Figur 2: Schematisches Verfahrensfließbild: Variante B
Figur 3: Rasterelektronenmikroskopaufnahme eines durchgeschnittenen Pellets aus der Sprühgranulation gemäß Beispiel.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Unter "konzentrierten" Metallchloridlösungen werden im folgenden Lösungen mit einer Metallchlorid-Konzentration von mindestens 20 Gew.-%, bevorzugt mindestens 30 Gew.-% und insbesondere 40 bis 60 Gew.-% verstanden. Unter einem "hohen" Eisenchloridanteil wird im folgenden ein Eisenchloridanteil von >50 Gew.-% und bevorzugt >70 Gew.-% verstanden.

Das erfindungsgemäße Verfahren geht von dem Verfahren gemäß EP 0 625 957 B1 aus, wobei jedoch der Pelletisierungsschritt bei einer höheren Temperatur von 150 bis 300°C durchgeführt wird, so dass mindestens ein Teil des Eisenchlorids bereits in Eisenoxid und HCl umgewandelt wird.

Erfindungsgemäß wird eine konzentrierte Metallchloridlösung mit hohem Eisenchloridanteil, wobei das Eisen zumindest teilweise dreiwertig ist, eingesetzt. Bevorzugt wird die Metallchloridlösung zunächst wie in dem bekannten Verfahren gemäß EP 0 625 957 B1 vorkonzentriert. Je nach Fe³⁺/Fe²⁺-Verhältnis kann eine deutlich höhere Fe-Konzentration als die üblichen 120 g/l Fe eingestellt werden, ohne dass es zu Auskristallisationen im Venturidüsensystem kommt. Liegt das gesamte gelöste Eisen dreiwertig vor - beispielsweise infolge einer oxidativen Vorbehandlung des Ilmenits vor der Säurelaugung - kann die Metallchloridlösung auf bis zu 60 Gew-% vorkonzentriert werden, ohne dass sich festes Eisenchlorid bildet.

Anschließend wird die konzentrierte Metallchloridlösung, die gegebenenfalls einer Vorkonzentration unterworfen wurde, bei Temperaturen von 150 bis 300°C, bevorzugt 150 bis 250°C sprühgranuliert, wobei die Lösung über mehrere Sprühdüsen in ein Wirbelbett eingedüst wird. In dem angegebenen Temperaturfenster hydrolisieren FeCl₃ weitgehend und FeCl₂ teilweise zu Eisenoxid:

2 FeCl₃ + 3 H₂O → Fe₂O₃ + 6 HCl

2 FeCl₂ + 2 H₂O + 0,5 O₂ → Fe₂O₃ + 4 HCl

Eine Verdampfung des FeCl₃-Anteils findet in diesem Temperaturbereich nicht statt. Bevorzugt wird ein möglichst großer Anteil des Eisenchlorids hydrolisiert.

Die Sprühgranulationswirbelschicht wird bevorzugt über einen Heißgaserzeuger beheizt. Die Zulufttemperatur sollte zwischen 300°C und 1000°C liegen, bevorzugt > 600°C. Es bildet sich ein Eisenchlorid-haltiges Eisenoxidgranulat (Pellets) von etwa 1 bis 5 mm Größe. Die Zugabe von Granulationskeimen in Form von rückgeführtem Zyklonstaub oder anderen Feststoffen ist vorteilhaft.

Die Verbrennung im Heißgaserzeuger sollte möglichst mit geringem Luftüberschuss erfolgen. Die Vermeidung von freiem Sauerstoff im Abgas der Sprühgranulation dient zur Minimierung der Deacon-Reaktion (Bildung von Chlor), welche bei niedrigen Temperaturen auftreten kann.

Die Pellets werden durch eine geeignete Transportapparatur in den Pyrohydrolyse-Reaktor gefördert. Der Pyrohydrolyse-Reaktor ist bevorzugt ein Wirbelschichtreaktor, der mit einer Temperatur von über 550°C, bevorzugt über 800°C und insbesondere bei etwa 850°C betrieben wird, wobei das Material mehrere Stunden (beispielsweise 3 bis 10 Stunden) in der Wirbelschicht verweilt. Dort werden die restlichen Eisenchloride und die meisten sonstigen Metallchloride, insbesondere Magnesium- und Calciumchlorid, hydrolysiert. Dadurch kann ein sehr niedriger Restchloridgehalt unter 0,1 Gew.-% erreicht werden, wie er für die Weiterverarbeitung in der Metallindustrie erwünscht ist. Das erzeugte granulare Metalloxid enthält im wesentlichen Eisenoxid.

Die aus der Sprühgranulationswirbelschicht und Pyrohydrolysewirbelschicht austretenden Gasströme enthalten das zurück zu gewinnende HCl. Der HCl-Gehalt des aus der Sprühgranulationswirbelschicht austretenden Gasstroms hängt von dem Gesamt-Eisenchloridgehalt und dem Fe³⁺/Fe²⁺-Verhältnis der in die Sprühgranulationswirbelschicht eintretenden Metallchloridlösung ab. Insgesamt kann erfindungsgemäß überazeotrope Salzsäure rückgewonnen werden mit einer Konzentration von >20 Gew.-% bevorzugt >25 Gew.-% und insbesondere >30 Gew.-%. Die austretenden Gasströme werden in HCl-Absorptionskolonnen nach Stand der Technik geleitet. Hierbei ist eine isotherme Absorption (mit zusätzlicher Kühlung) von Vorteil.

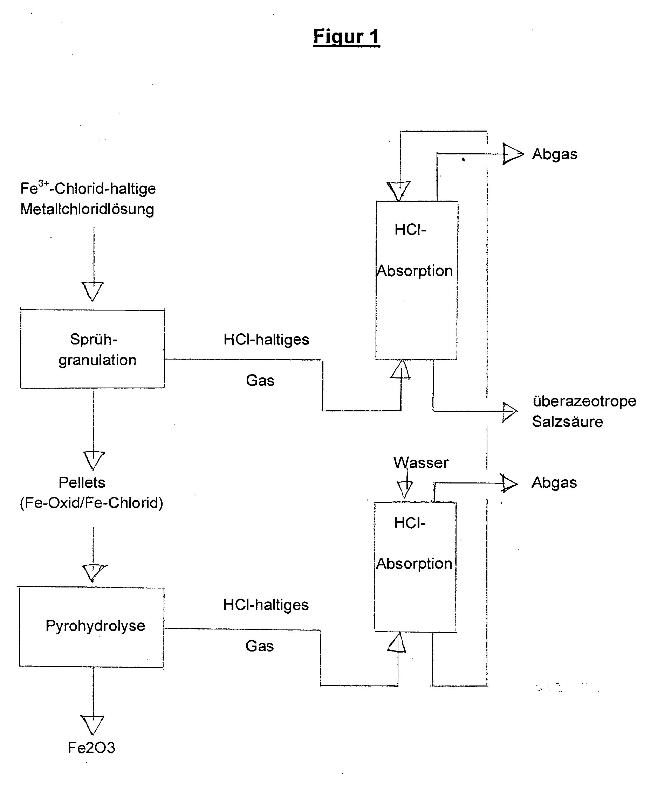

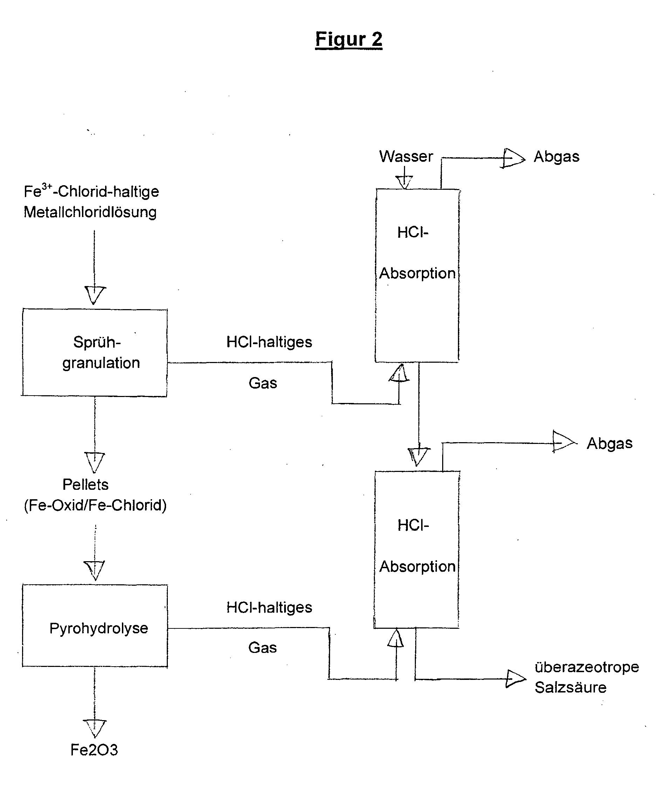

Bei hohem FeCl₃-Gehalt der Lösung (Fe³⁺/Fe²⁺ >1) entsteht in der Sprühgranulation ein HClreicher Gasstrom. Dieser wird in eine Absorptionskolonne geleitet, um überazeotrope Salzsäure zu generieren. Als Waschflüssigkeit dient bevorzugt der Ablauf der HCl-Absorptionskolonne der Pyrohydrolyse (s. Fig. 1: Verfahrensvariante A). Ist der FeCl₃-Gehalt der Eingangs-Lösung niedriger, so ist der Gasstrom der Pyrohydrolyse der HCl-reichere Gasstrom und dieser wird in eine Absorptionskolonne geleitet, um überazeotrope Salzsäure zu generieren. Als Waschflüssigkeit dient dann bevorzugt der Ablauf der HCl-Absorptionskolonne der Sprühgranulation (s. Fig. 2: Verfahrensvariante B).

Die Abgasströme können gegebenenfalls einer weiteren Gaswäsche unterzogen werden, um gesetzlich vorgegebene Grenzwerte einzuhalten.

Das erfindungsgemäße Verfahren weist gegenüber dem Stand der Technik folgende Vorteile auf:
Es wird überazeotrope Salzsäure (>20% bis zu über 30% bei stark FeCl₃-haltigen Lösungen) zurückgewonnen, wodurch die beim Säure-Erzleaching notwendigen Säurekreisläufe und die notwendige Wasserverdampfung klein gehalten werden können.
Es können Lösungen mit einem hohen FeCl₃-Gehalt verarbeitet werden.
Das entstehende Metalloxid ist granular (> ca. 500 µm), enthält im wesentlichen Eisenoxid und hat einen geringen Restchloridgehalt, wodurch es sich gut als Rohstoff für die Eisenherstellung eignet.
Ein Großteil der Wasserverdampfung findet bei niedrigen Temperaturen statt, und es können somit hohe Durchsätze in einer Anlage erreicht werden.

### Beispiel

Die Erfindung wird anhand des folgenden Beispiels genauer beschrieben, ohne dass dadurch der Umfang der Erfindung eingeschränkt werden soll.

Ilmeniterz aus Norwegen wurde mit 25%iger Salzsäure unter Siedebedingungen gelaugt. Der Rückstand wurde abfiltriert.

Es verblieb eine Metallchloridlösung folgender Zusammensetzung:

| | |
|---|---|
| freie HCl | 4,4 Gew.-% |
| FeCl₂ | 17,4 Gew.-% |
| FeCl₃ | 8,5 Gew.-% |
| MgCl₂ | 2,2 Gew,-% |

Mn-, Cr-, V-, Al- und Ca-Chloride lagen jeweils bei <1 Gew.-%.

Die Lösung wurde über einen Zeitraum von 8 Stunden kontinuierlich in eine Sprühgranulationswirbelschicht mit ca. 30 cm Durchmesser eingedüst. Die Betttemperatur wurde durch die Brennstoffzufuhr auf 160°C geregelt.

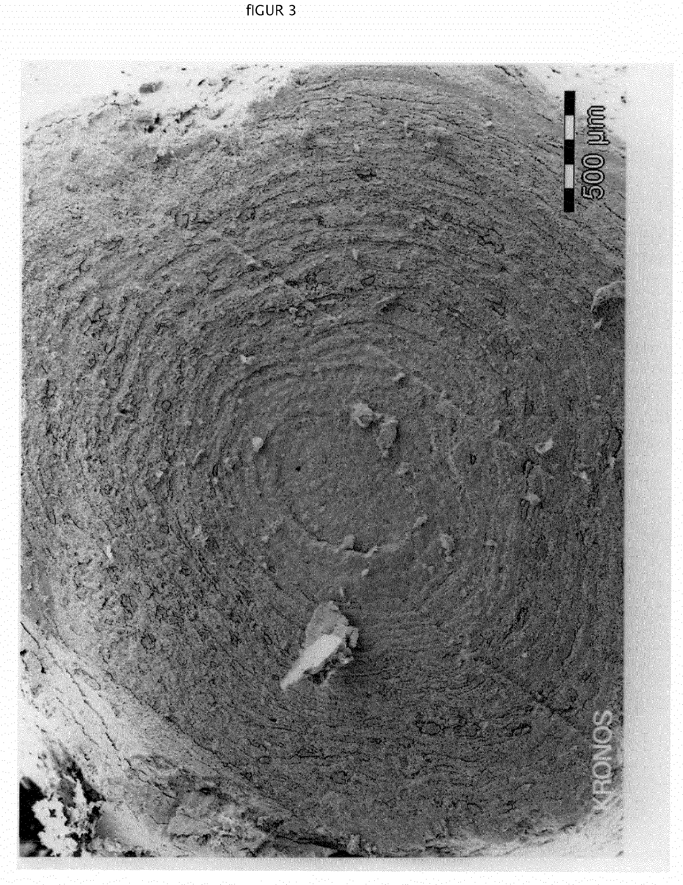

Die entstandenen Pellets wurden kontinuierlich abgezogen. Das entstehende Abgas wurde in einer Kolonne gewaschen. Die entstandenen Pellets hatten einen Durchmesser von 1 bis 5 mm und einen zwiebelschalförmigen Aufbau (s. Fig. 3). Die Analyse über Röntgenbeugung (XRD) zeigte als Hauptkomponente Eisen(II)-chlorid-Monohydrat (FeCl₂*1H₂O) sowie Hämatit und Magnetit. Wichtigster Nebenbestandteil ist Magnesiumchlorid (5 Gew.-%). Es wurde kein Eisen(III)-Chlorid gefunden, was auf eine vollständige Umwandlung zu Eisenoxid hinweist. Die freie Feuchte lag bei 3 bis 4 Gew.-%.

Das Abgas der Sprühgranulations-Wirbelschicht hatte folgende Zusammensetzung:

| | |
|---|---|
| H₂O | 38 Vol.-%, |
| HCl | 5 Vol.-% |
| N₂ | 45 Vol.-% |
| O₂ | 7 Vol.-% |
| CO₂ | 5 Vol.-% |

Anschließend wurden die Pellets in einer Pyrohydrolysewirbelschicht behandelt. Die Wirbelschicht hatte einen Durchmesser von 10 cm, wurde extern beheizt und durch Brennstoffzugabe (Kohlestaub) direkt in die Wirbelschicht auf 950°C vorgeheizt. Dann wurden etwa 3 kg der Pellets über einen Zeitraum von etwa 3 Stunden in die Wirbelschicht dosiert. Die Temperatur wurde durch weitere Brennstoffzugabe konstant bei 950°C gehalten.

Nach Ablauf dieser Zeit wurde die Zugabe und die Beheizung gestoppt. Die behandelten Pellets enthielten 90 Gew.-% Fe₂O₃ und 5,7 Gew.-% MgO. Als weitere Bestandteile traten Mn-, Cr-, V-, AI- und Ca-Oxid mit jeweils <1 Gew.-% auf. Der Anteil an Chloriden insgesamt lag bei unter 0,5 Gew.-%. Der mittlere Durchmesser der Pellets (d₅₀ massebezogen) lag bei etwa 800 µm, die Schüttdichte bei 2300 kg/m³.

Das Abgas der Pyrohydrolysewirbelschicht wurde zunächst durch Einsprühen von Wasser auf etwa 100°C gequencht und dann in einer Kolonne, in die Wasser aufgegeben wurde, aufgefangen. Vor und nach dem Quenchen hatte das Abgas der Pyrohydrolyse folgende Zusammensetzung:

| | vor Quenchen | nach Quenchen |
|---|---|---|
| H₂O | 19 Vol.-% | 51 Vol.-% |
| HCl | 17 Vol.-% | 10 Vol.-% |
| N₂ | 56 Vol.-% | 34 Vol.-% |
| O₂ | 2 Vol.-% | 1 Vol.-% |
| CO₂ | 6 Vol.-% | 4 Vol.-% |

Die Absorption ergab (Gleichgewichtszustand, adiabate Bedingungen, d.h. ohne Kühlung) im Ablauf eine HCl-Konzentration von etwa 23 %.

## Patentansprüche

1. Verfahren zur Rückgewinnung von HCl aus konzentrierter Metallchloridlösung mit hohem Eisenchloridanteil, wobei das Eisen zumindest teilweise in dreiwertiger Form vorliegt, umfassend die Verfahrensschritte:
a) Sprühgranulation der Metallchloridlösung bei Temperaturen von 150 bis 300°C, bevorzugt 150 bis 250°C, wobei zumindest ein Teil des Eisenchlorids in Eisenoxid umgewandelt wird und ein Granulat sowie HCl-haltiges Gas entsteht,
b) Pyrohydrolyse des in Verfahrensschritt a) entstandenen Granulats in einem Reaktor bei Temperaturen von über 550°C, bevorzugt über 800°C, wobei HCl-haltiges Gas entsteht,
c) Rückgewinnung einer überazeotropen HCl (Konzentration >20 Gew.-%) aus den in den Verfahrensschritten a) und b) entstandenen HCl-haltigen Gasen.

2. Verfahren nach Anspruch 1 **dadurch gekennzeichnet, dass** eine überazeotrope HCl mit einer Konzentration von >25 Gew.-% bevorzugt >30 Gew.-% rückgewonnen wird.

3. Verfahren nach Anspruch 1 oder 2 **dadurch gekennzeichnet, dass** in Schritt c) zusätzlich ein granulares Metalloxid rückgewonnen wird, das im wesentlichen Eisenoxid enthält.

4. Verfahren nach einem oder mehreren der Ansprüche 1 bis 3 **dadurch gekennzeichnet, dass**
die Metallchloridlösung dem Prozess des Erz-Säureleaching entstammt.

5. Verfahren nach einem oder mehreren der Ansprüche 1 bis 4 **dadurch gekennzeichnet, dass**
die Metallchloridlösung ein Fe³⁺/Fe²⁺-Verhältnis von >1 aufweist.

6. Verfahren nach einem oder mehreren der Ansprüche 1 bis 5 **dadurch gekennzeichnet, dass**
die Sprühgranulation in einer Wirbelschicht durchgeführt wird.

7. Verfahren nach einem oder mehreren der Ansprüche 1 bis 6 **dadurch gekennzeichnet, dass**
die Pyrohydrolyse in einem Wirbelschichtreaktor durchgeführt wird.

8. Verfahren nach Anspruch 3 **dadurch gekennzeichnet, dass** das erzeugte granulare Metalloxid zur Eisenherstellung verwendet wird.
